# FASCICULE DE BREVET EUROPEEN

(11) **EP 4 630 342 B1**
(45) Date de publication et mention de la délivrance du brevet: **28.10.2026**
(21) Numéro de dépôt: 23820923.3
(22) Date de dépôt: 08.12.2023
(51) Int. Cl.: B65G 1/04

(54) **VEHICULE AUTONOME POUR SYSTEME DE STOCKAGE ET DE RECUPERATION D'ARTICLES COMPORTANT UN DEFLECTEUR**
AUTONOMES FAHRZEUG MIT EINEM DEFLEKTOR FÜR EIN SYSTEM ZUR LAGERUNG UND ENTNAHME VON GEGENSTÄNDE
AUTONOMOUS VEHICLE FOR ARTICLE STORAGE AND RETRIEVAL SYSTEM WITH DEFLECTOR

(30) Priorité: 09.12.2022 FR 2213072
(43) Date de publication de la demande: 15.10.2025
(73) Titulaire: Exotec Product France, 59170 Croix (FR)
(72) Inventeur: LEPILLIER, Loïc, 59150 Wattrelos (FR); DE TONNAC, Dimitri, 59260 Lezennes (FR)
(74) Mandataire: Plasseraud IP
(86) Numéro de dépôt international: PCT/EP2023/084864
(87) Numéro de publication internationale: WO 2024/121372

(56) Documents cités:
- CN-U- 209 973 401
- CN-U- 217 321 833
- KR-B1- 101 884 825
- US-A1- 2020 172 332
- US-B2- 10 737 711

## Description

### Domaine technique

La présente divulgation relève du domaine des systèmes de stockage et de récupération automatisés ASRS (de l'anglais *« Automated Storage and Retrieval* Systems ») dans les entrepôts.

### Technique antérieure

Les systèmes de stockage et de récupération automatisés (ASRS) sont couramment équipés de racks de stockage et d'une flotte véhicules autonomes, ou AGV (de l'anglais « Auto-Guided Vehicles »). Un exemple est donné dans le document US 2020/0172332 A1. Le document US 2020/0172332 A1 divulgue en particulier un véhicule autonome pour système de stockage et de récupération d'articles selon le préambule de la revendication 1.

Les racks de stockage sont notamment des structures verticales disposées dans l'entrepôt. Les racks de stockage comprennent typiquement des montants verticaux sur lesquels sont solidarisés des couples d'équerres pour le soutien de réceptacles. Les deux équerres du couple agencées en porte-à-faux des montants, sont orientées l'une vers l'autre, configurées pour soutenir l'un des réceptacles. Les couples d'équerres définissent ainsi des alvéoles suivant la hauteur du rack, chaque alvéole étant adaptée à loger un des réceptacles contenant un ou plusieurs articles à stocker au sein de l'entrepôt.

Ledit réceptacle consiste en général en un bac ou un plateau typiquement en matière plastique, généralement de forme parallélépipédique à base rectangulaire, et à-même de stocker le ou lesdits articles en question. Ces réceptacles sont reçus dans les alvéoles en reposant sur les équerres des racks de stockage.

Chaque véhicule autonome peut parcourir l'entrepôt pour collecter des réceptacles logés dans les alvéoles des racks de stockage. Il est connu des véhicules autonomes se déplaçant au sol et adaptés pour grimper verticalement le long des montants verticaux des racks de stockage afin de collecter des réceptacles logés dans une alvéole en hauteur.

Cependant, il a été constaté que le déplacement vertical des véhicules autonomes le long des racks de stockage génère des vibrations, engendrant un déplacement des réceptacles le long des équerres. Les réceptacles peuvent alors faire saillie des alvéoles, jusqu'à chuter ou se retrouver sur la trajectoire des véhicules autonomes. Dans ce dernier scénario, le véhicule autonome percute le réceptacle lors de son déplacement vertical, avec bien souvent des dégâts sur le véhicule et/ou le réceptacle pouvant complétement bloquer le véhicule autonome dans les racks. Un déplacement de quelques millimètres du réceptacle est suffisant pour générer des collisions. Une chute de réceptacle ou de tels dégâts nécessite une maintenance qui perturbe le fonctionnement de l'ASRS dans la mesure où le système doit être interrompu et la production arrêtée. Cela représente donc une perte sèche pour l'utilisateur final du système.

Il a été proposé de disposer des véhicules autonomes spécifiques au sein de l'ASRS qui se distinguent de la flotte de véhicules autonomes car ils n'ont pas comme mission de collecter des réceptacles, mais simplement de repousser et de repositionner de manière précise les réceptacles dans les alvéoles des racks de stockage, lorsque ces derniers font saillie desdites alvéoles.

De tels véhicules autonomes spécifiques parcourent l'entrepôt suivant les mêmes trajets que la flotte de véhicule autonomes, et participent alors à encombrer l'entrepôt. Dès lors, il peut devenir nécessaire de réduire le nombre de véhicules autonomes circulant pour la collecte des réceptacles. Le rendement de l'ASRS peut être significativement réduit.

De plus, il est nécessaire d'identifier les réceptacles faisant saillie des racks pour guider les véhicules autonomes spécifiques vers ces réceptacles en particulier. Dans ce cas, l'ASRS doit comporter des moyens pour localiser les réceptacles déplacés, ainsi que des moyens pour commander les véhicules spécifiques vers les réceptacles déplacés. La complexité et les coûts liés à l'implémentation et l'utilisation de l'ASRS sont augmentés.

Par ailleurs, il existe un délai entre la détection d'un réceptacle déplacé et le passage du véhicule spécifique pour replacer le réceptacle. La correction n'est pas immédiate. En conséquence, les véhicules autonomes ne peuvent pas se déplacer le long du rack comportant un réceptacle déplacé, au risque de le percuter. Là encore, le rendement de l'ASRS s'en trouve réduit.

### Résumé

La présente divulgation a notamment pour but d'apporter une solution simple, économique et efficace aux problèmes mentionnés ci-dessus.

Il est proposé un véhicule autonome pour système de stockage et de récupération d'articles (ASRS), le véhicule autonome étant configuré pour se déplacer dans une aire de stockage pour collecter un réceptacle parmi une pluralité de réceptacles stockés dans l'aire de stockage, chaque réceptacle étant disposé à l'intérieur d'une alvéole de l'aire de stockage, les alvéoles étant réparties suivant deux directions horizontales et selon une direction verticale, le véhicule autonome comprenant:
- un châssis ;
- des moyens de préhension aptes à saisir le réceptacle;
- des moyens de roulage adaptés à déplacer le châssis selon les deux directions horizontales ;
- des moyens de grimpe adaptés pour déplacer le châssis selon la direction verticale;- au moins un déflecteur monté latéralement sur le châssis, le déflecteur présentant une surface de guidage, externe, inclinée par rapport à la direction verticale, configurée pour repousser les réceptacles vers un fond des alvéoles lors du déplacement du châssis selon la direction verticale.

Ainsi, le déflecteur fait partie intégrante du véhicule autonome utilisé pour la collecte des réceptacles. L'encombrement de l'aire de stockage peut être réduit par rapport à une situation où des véhicules circulent pour récupérer des réceptacles et d'autres circulent pour repositionner les bacs déplacés.

Lors du passage du véhicule autonome devant les alvéoles pour récupérer un réceptacle, le déflecteur peut repousser automatiquement les réceptacles déplacés, sans arrêt ou action particulière de la part du véhicule autonome. Outre le fait que le véhicule autonome n'a pas besoin de connaitre le positionnement des réceptacles déplacés, ni de les éviter, le choix de caractéristiques particulières pour le déflecteur permet un repositionnement immédiat et extrêmement précis des réceptacles déplacés jusqu'alors.

De manière générale, le déflecteur est avantageusement configuré pour assurer le déplacement des réceptacles vers le fond des alvéoles, lors du déplacement vertical du véhicule, par le travail de la surface de guidage du déflecteur qui est alors fixe par rapport au châssis du véhicule. Avantageusement, un tel fonctionnement ne nécessiter pas en soi un déplacement du déflecteur par rapport au châssis lors de ce travail, et donc l'emploi d'un actionneur pour un tel déplacement.

Les caractéristiques exposées dans les paragraphes suivants peuvent, optionnellement, être mises en œuvre, indépendamment les unes des autres ou en combinaison les unes avec les autres.

Le châssis peut embarquer des composants internes comportant au moins une électronique de commande, une ou plusieurs motorisations des moyens de roulage, et une source autonome d'énergie électrique, ledit châssis comportant un capotage comportant une ou plusieurs coques, recouvrant le châssis en cachant au moins partiellement les composants internes, et dans lequel ledit au moins un déflecteur est la coque ou l'une au moins des coques du capotage, recouvrant un flanc du châssis, s'étendant selon la direction verticale en faisant saillie vers l'extérieur du châssis.

Ainsi, le déflecteur est une pièce de construction simple qui combine une double fonction, à savoir :
- une fonction première d'élément de guidage, configuré pour repousser le réceptacle lors du déplacement vertical du véhicule,
- une fonction d'élément de capotage d'un ou plusieurs flancs du châssis, configuré pour cacher les composants internes.

La géométrie elle-même du déflecteur permet de repositionner les réceptacles dans les alvéoles. Le déflecteur ne nécessite pas l'ajout d'une pièce supplémentaire au capotage. En conséquence, la complexité du véhicule autonome n'est pas augmentée par l'ajout du déflecteur.

En outre, le déflecteur peut être intégré au véhicule autonome de manière simple, en modifiant une pièce extérieure déjà existante du véhicule autonome. Il n'y a pas de nouveaux composants, mais une simple modification de la forme et du dimensionnement du capotage. L'intégration du déflecteur peut être réalisée en utilisant les moyens de fixation déjà existant sur le châssis du véhicule autonome.

Dans une variante, ledit au moins un déflecteur est distinct de la coque ou des coques du capotage. Il est ainsi possible de dissocier la fonction de capotage, qui peut être assurée par des éléments légers et potentiellement souples (par exemple un plastique thermoformé), de la fonction de déflecteur, qui peut être assurée par une pièce rigide et résistante (par exemple en métal), localement positionnée à un endroit approprié du véhicule.

La surface de guidage peut s'étendre selon la direction verticale et peut comprendre une section de guidage inclinée configurée pour repousser les réceptacles vers le fond des alvéoles lors d'une ascension selon la direction verticale.

Le véhicule autonome effectue typiquement une ascension pour se situer verticalement au niveau d'un réceptacle à récupérer, charger le réceptacle à récupérer, avant de redescendre avec le réceptacle. En repoussant les réceptacles lors de l'ascension du véhicule autonome, on évite tout risque de collision entre le véhicule autonome et les réceptacles déplacés.

La section de guidage inclinée configurée pour repousser les réceptacles vers le fond des alvéoles lors d'une ascension selon la direction verticale peut s'étendre entre un premier point disposé à une extrémité supérieure du déflecteur et un deuxième point disposé entre l'extrémité supérieure et une extrémité inférieure du déflecteur ; la droite reliant les premier et deuxième points peut former avec un axe vertical s'étendant selon la direction verticale, un angle compris entre 5° et 20°.

Grâce à l'angle spécifique sur la partie supérieure de la section de guidage, on évite un mauvais repositionnement des réceptacles ou encore un rebond des réceptacles contre une butée prévue au fond des alvéoles.

Une distance mesurée selon la direction verticale entre le premier point et le deuxième point peut être comprise entre 60 mm et 100 mm.

La section de guidage fait saillie du châssis d'une distance qui permet de venir repousser les réceptacles qui sont déplacés hors des alvéoles de quelques millimètres seulement (par exemple de 10 mm), sans pour autant interférer avec des organes de grimpe le long duquel le véhicule autonome grimpe ou les montants des racks de stockage.

La surface de guidage peut comporter :
- ladite section de guidage inclinée configurée pour repousser les réceptacles vers le fond des alvéoles lors d'une ascension selon la direction verticale qui est une première section de guidage ; et
- une deuxième section de guidage inclinée, disposée inférieure à la première section selon la direction verticale, configurée pour repousser vers le fond les alvéoles lors d'une descente du véhicule selon la direction verticale.

Ainsi, le déflecteur peut repousser automatiquement les réceptacles déplacés lors de la montée du véhicule autonome pour récupérer un réceptacle, et également lors de la descente du véhicule autonome, sans arrêt ou action particulière de la part du véhicule autonome.

Il peut exister un risque que le réceptacle soit de nouveau déplacé suite à son repositionnement pendant l'ascension du véhicule autonome. Le déplacement peut être provoqué par un rebond contre le fond des alvéoles, engendré par une poussée exagérée sur le réceptacle par la (première) section de guidage du déflecteur lors de l'ascension, mais encore plus par les vibrations provoquées par le déplacement d'un autre véhicule autonome se trouvant au voisinage du réceptacle. Le déplacement peut conduire à ce que le réceptacle soit malencontreusement de nouveau en saillie, alors que le véhicule autonome se déplace verticalement selon la direction verticale au-dessus du réceptacle. La deuxième section de guidage du déflecteur permet alors d'éviter une collision lors de la descente, en repoussant de nouveau le réceptacle vers le fond de l'alvéole, lors de la descente du véhicule.

La deuxième section de guidage inclinée peut s'étendre entre un troisième point, éventuellement confondu avec le deuxième point, et un quatrième point disposé à l'extrémité inférieure du déflecteur, la droite reliant les troisième et quatrième points formant avec la direction verticale un angle compris entre 5° et 20°.

Grâce à l'angle spécifique sur la partie inférieure de la section de guidage, on évite un mauvais repositionnement des réceptacles et, plus encore, on permet de repousser le réceptacle en saillie déplacé par les vibrations liées au déplacement d'un véhicule autonome circulant au voisinage du réceptacle ou un rebond contre une butée prévue au fond des alvéoles.

Une distance mesurée selon la direction verticale entre le troisième point et le quatrième point est comprise entre 60 mm et 100 mm.

La hauteur cumulée de la première et de la deuxième section de guidage correspond à la hauteur d'un capotage standard, sans sections de guidage. Il est ainsi possible de monter la coque au châssis sans modification du châssis, en utilisant des moyens de fixations déjà existants.

La coque peut être une structure plastique à paroi mince, de préférence la coque est en polycarbonate. Alternativement, la coque peut être une structure métallique à paroi mince, par exemple en aluminium.

Ainsi, la coque est facilement réalisable à faible coût. Pour autant, la coque possède des caractéristiques mécaniques, notamment une rigidité, adaptée à repousser des réceptacles ayant une masse comprise entre 1,5 kg et 30 kg sans casser.

Le véhicule autonome peut comprendre deux déflecteurs montés sur deux flancs opposés du châssis.

Le véhicule autonome peut effectuer une ascension en s'engageant avec des organes de grimpe prévus sur deux racks de stockage se faisant face. En prévoyant des déflecteurs en vis-à-vis de chacun des deux racks de stockage, il est possible de repousser les réceptacles déplacés des alvéoles de ces deux racks de stockage.

Les moyens de grimpe peuvent comporter :
- au moins une roue dentée motorisée, de préférence deux roues dentées, agencée latéralement sur le châssis, du même côté que le déflecteur, ladite au moins une roue dentée étant configurée pour s'engrener avec un organe de grimpe comprenant une crémaillère ou une chaine à maillon s'étendant suivant la direction verticale,
- un mécanisme de déploiement configuré pour déployer et rétracter ladite au moins une roue dentée par rapport au châssis, ladite au moins une roue dentée passant d'une position rétractée, destinée à découpler la roue de la crémaillère à l'organe de grimpe jusqu'à une position déployée configurée pour coupler ladite roue dentée audit organe de grimpe, et dans lequel ledit mécanisme de déploiement est configuré pour déployer et rétracter le déflecteur, conjointement au déploiement et à la rétractation de ladite au moins une roue dentée.

La largeur du véhicule autonome dans la position rétractée est inférieure à l'espace entre les racks de stockage formant des allées, de sorte que le véhicule autonome puisse circuler librement entre les racks. Le déploiement du déflecteur et de la roue dentée permet de rapprocher les moyens de grimpe et le déflecteur des racks de stockage pour grimper et repousser les bacs, respectivement.

Les moyens de roulage peuvent comprendre au moins une roue adaptée au déplacement du châssis et des moyens de changement de direction adapté à changer l'orientation de la roue.

Le véhicule autonome peut se déplacer au sol sans nécessiter des moyens de guidage tels que des rails (déplacement en champs libre). Le véhicule autonome peut ainsi facilement naviguer dans l'entrepôt, et circuler même si l'agencement des racks de stockage est modifié. Le véhicule autonome est polyvalent. Les véhicules sont flexibles et il est possible de remanier les racks de stockage aisément et sans interrompre la production pour s'adapter aux besoins (en cas décroissance de l'activité par exemple).

Selon un autre aspect, il est proposé un système de stockage et de récupération d'articles comprenant :
- une pluralité de racks de stockage disposés dans une aire de stockage suivant deux directions horizontales, chaque rack s'étendant selon une direction verticale, les racks de stockage comportant :
- des alvéoles suivant la direction verticale, les alvéoles présentant des ouvertures de chargement ou déchargement de réceptacles suivant une direction de chargement de déchargement horizontale, et
- des organes de grimpe, verticaux,
- une pluralité de réceptacles disposés dans les alvéoles de chaque rack de stockage,
- au moins un véhicule autonome selon l'une quelconque des revendications précédentes, comportant les moyens de grimpe configurés pour être couplés aux organes de grimpe pour assurer le déplacement vertical du châssis, et dans lequel ledit au moins déflecteur fait face aux ouvertures de chargement ou déchargement des alvéoles du rack de stockage lorsque le châssis se déplace le long de la direction verticale, ledit au moins un déflecteur interposé entre les ouvertures de chargement du rack de stockage et le châssis du véhicule.

Dans une position nominale du réceptacle dans l'alvéole, une distance entre une extrémité arrière du réceptacle et le fond de l'alvéole peut être comprise entre 8 et 12 mm, et le véhicule autonome peut être configuré pour replacer le réceptacle dans la position nominale à partir d'un déplacement de 10 mm du réceptacle depuis la position nominale.

Chaque réceptacle peut être adapté à recevoir au moins un article, le réceptacle et l'au moins un article ayant une masse comprise entre 1,5 kg et 30 kg. La géométrie du déflecteur est adaptée à repositionner de manière précise les réceptacles ayant une telle charge.

Selon encore un autre aspect, il est proposé un procédé de récupération d'un réceptacle mis en œuvre dans un système de stockage et de récupération d'articles :
- Associer le véhicule autonome à un réceptacle à récupérer dans l'aire de stockage ;
- Déplacer le véhicule autonome selon les deux directions horizontales jusqu'à ce que le véhicule autonome soit aligné avec des organes de grimpe verticaux d'un des racks de stockage recevant le réceptacle à récupérer ;
- Coupler les moyens de grimpe du véhicule aux organes de grimpe du rack de stockage
- Déplacer le véhicule autonome selon la direction verticale jusqu'à ce que le véhicule autonome se situe verticalement au niveau du réceptacle à récupérer, et, pendant le déplacement du véhicule selon la direction verticale, repousser des réceptacles faisant saillie des alvéoles vers le fond des alvéoles par contact entre les réceptacles et le déflecteur du véhicule autonome.

Le véhicule autonome peut se déplacer selon la direction verticale à une vitesse comprise entre 0 m/s et 3 m/s. De telle vitesses permettent un repositionnement correct des réceptacles dans les alvéoles.

### Brève description des dessins

D'autres caractéristiques, détails et avantages apparaîtront à la lecture de la description détaillée ci-après, et à l'analyse des dessins annexés, sur lesquels :
**Fig. 1**

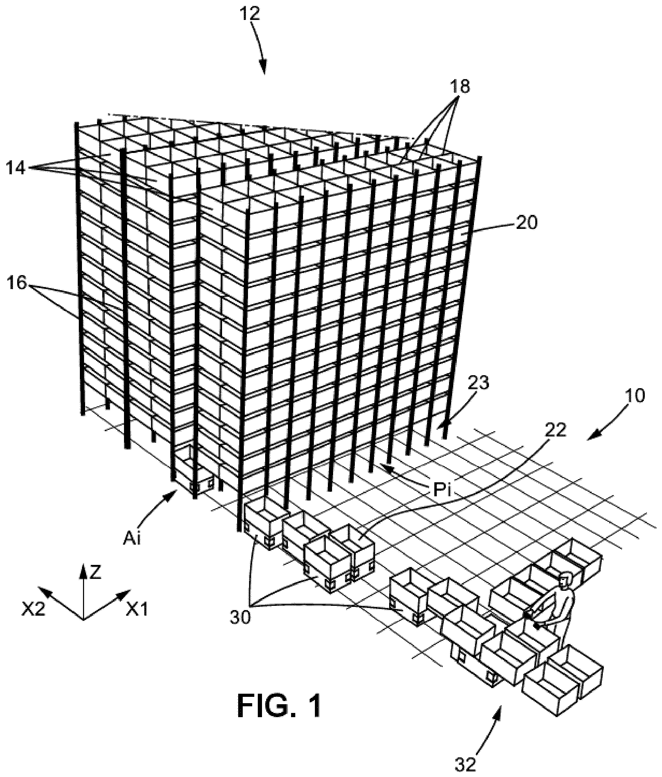

   [Fig. 1] est une vue schématique d'un système de stockage et de récupération d'articles.
**Fig. 2**

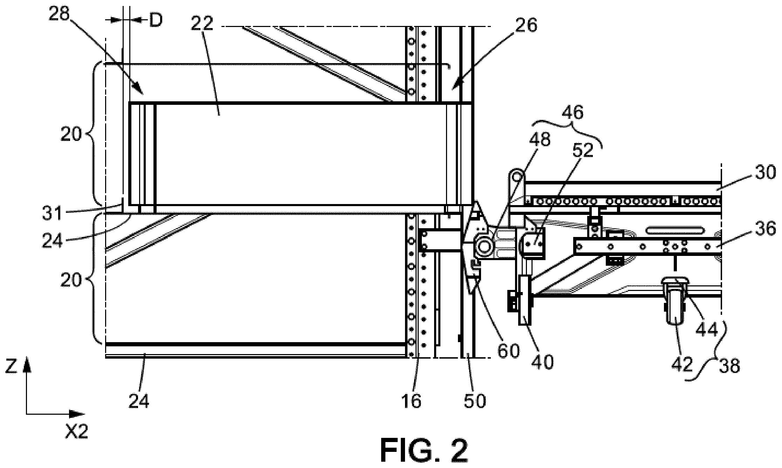

   [Fig. 2] est une vue schématique d'un détail d'un rack de stockage du système de stockage et de récupération d'article de la figure 1.
**Fig. 3**

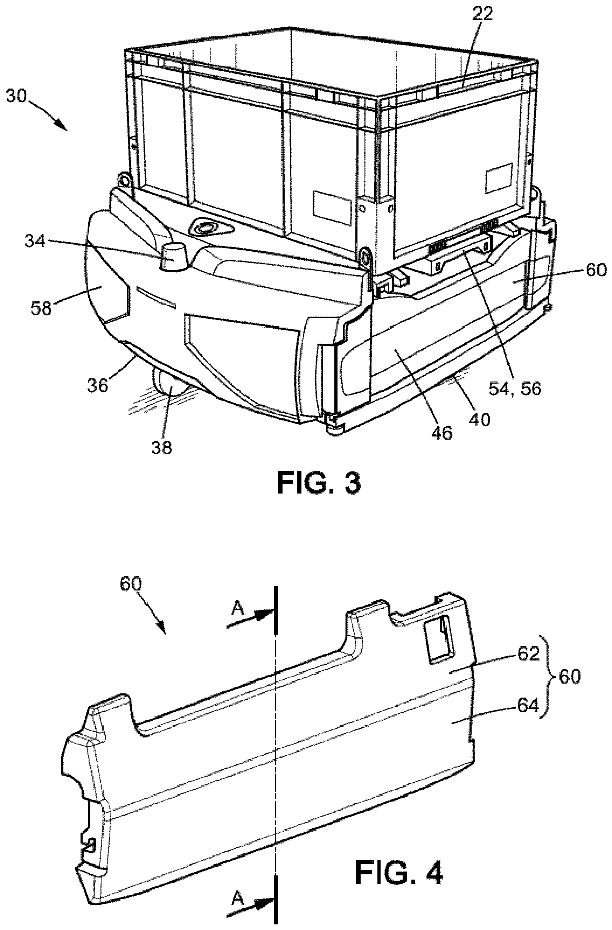

   [Fig. 3] est une vue schématique en perspective d'un véhicule autonome pouvant être mis en œuvre dans le système de stockage et de récupération d'article de la figure 1.
**Fig. 4**
   [Fig. 4] est une vue schématique en perspective d'une coque d'un capotage pouvant être mis en œuvre dans le véhicule autonome de la figure 3.
**Fig. 5**

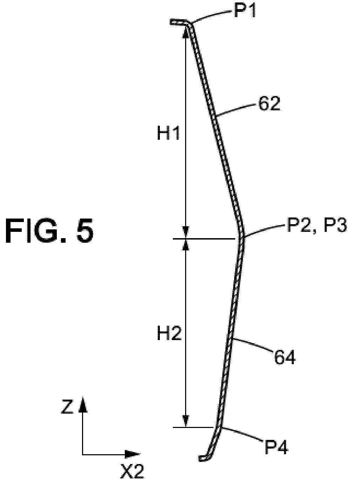

   [Fig. 5] est une section de la figure 4.
**Fig. 6**

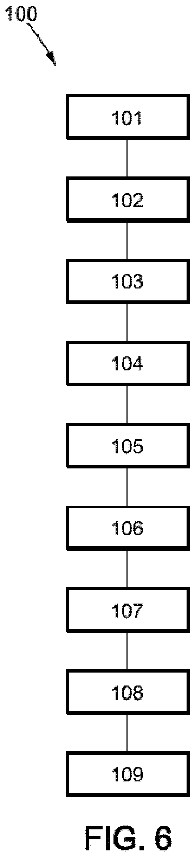

   [Fig. 6] représente un schéma fonctionnel d'un procédé de récupération d'un article mis en œuvre dans le système de stockage et de récupération d'articles de la figure 1.
**Fig. 7**

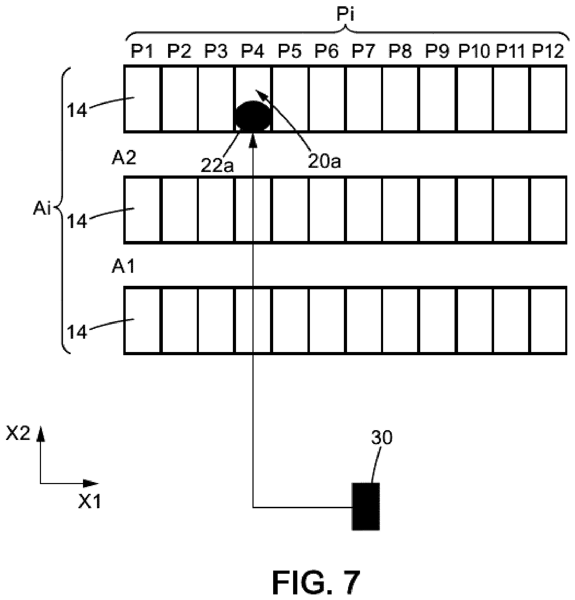

   [Fig. 7] est une vue schématique d'un exemple de déplacement de véhicule autonome dans le système de stockage et de récupération d'articles de la figure 1, pour récupérer un article.

### Description des modes de réalisation

La figure 1 représente schématiquement un système de stockage et de récupération automatisé ASRS 10 (de l'anglais « Automated storage and retrieval system ») qui comprend une aire de stockage 12. Dans la suite de la description, il est fait référence à une direction verticale Z, une première direction horizontale X1 et une deuxième direction horizontale X2. Il est compris que la direction verticale Z est perpendiculaire à la première direction horizontale X1 et à la deuxième direction horizontale X2. De plus, la deuxième direction horizontale X2 est perpendiculaire à la première direction horizontale X.

L'aire de stockage 12 comprend une pluralité de racks de stockage 14. Chaque rack de stockage 14 est desservi par au moins une allée Ai s'étendant selon la première direction horizontale X1. Chaque rack de stockage 14 comprend plusieurs paires de montants 16 verticaux disposés selon la première direction horizontale X1. Chaque montant 16 s'étend selon la direction verticale Z. Les montants 16 de chaque paire de montants sont écartés l'un de l'autre selon la deuxième direction horizontale X2. Chaque rack de stockage 14 forme ainsi une pluralité de colonnes 18 agencées les unes après les autres selon la première direction horizontale X1.

Chaque colonne 18 du rack de stockage 14 comprend une pluralité d'alvéoles 20 adaptées chacune pour contenir un réceptacle 22 qui contient lui-même au moins un article. Les alvéoles 20 de chaque colonne 18 sont disposées entre deux paires de montants 16 successives selon la première direction horizontale X1. Les alvéoles 20 de chaque colonne 18 sont en superposition sur plusieurs niveaux selon la direction verticale Z entre un niveau inférieur et un niveau supérieur.

L'alvéole 20 du niveau inférieur est au-dessus du niveau du sol. Selon un mode de réalisation, chaque colonne 18 peut comprendre donc un espace libre 23 formé verticalement entre le niveau du sol et l'alvéole 20 du niveau inférieur. Selon un mode de réalisation, l'aire de stockage 12 peut comprendre ainsi une pluralité de passages Pi s'étendant au niveau du sol selon la deuxième direction horizontale X2, chaque passage Pi passant par l'espace libre 24 de l'une des colonnes 22 de chaque rack de stockage 20. Ces passages Pi permettent la circulation de véhicules autonomes 30, sous les racks de stockage 14, pour permettre aux véhicules autonomes d'accéder directement à une position déterminée dans ladite au moins une allée Ai, et sans nécessiter au véhicule de se déplacer le long de ladite au moins une allée Ai.

Selon une autre réalisation (non illustrée), l'aire de stockage 12 peut être dépourvue de tels passages (référencés Pi) sous le rack de stockage 14. Le déplacement des véhicules autonomes jusqu'à une position déterminée dans ladite au moins une allée Ai requiert un déplacement du véhicule le long de ladite au moins une allée Ai depuis une de ses extrémités.

La figure 2 illustre plus en détails une alvéole 20 d'un rack de stockage 14. Des paires d'équerres 24 sont solidarisées aux paires de montants 16 de chaque colonne 18 pour séparer les alvéoles 20 les unes des autres selon la direction verticale Z. Chaque alvéole 20 est délimitée inférieurement par deux paires d'équerres 24 successives selon la direction verticale Z. Les réceptacles 22 dans les alvéoles 20 reposent sur une paire d'équerres 24. Les deux équerres d'une paire d'équerres 24 sont assujetties en porte-à-faux des montants 16, orientées l'une vers l'autre. Chaque paire d'équerres est configurée pour soutenir le réceptacle 22, par deux appuis séparés sous le réceptacle.

Chaque réceptacle 22 est reçu dans une ouverture de chargement 26 de l'alvéole 20 pour s'étendre vers un fond 28 de l'alvéole 20. L'ouverture de chargement 26 fait face à l'allée Ai desservant l'alvéole 20. Le fond 28 de l'alvéole 20 est distant de l'allée Ai. Dans l'exemple illustrée, chaque alvéole 20 peut recevoir deux réceptacles 22 l'un derrière l'autre selon la deuxième direction horizontale X2. Dans cet exemple, le fond 28 de l'alvéole 22 correspond à une portion centrale de l'alvéole 20, entre deux allées Ai voisines. Le fond 28 de chaque alvéole 20 est par exemple délimité par un moyen de butée 31, solidaire des équerres 24.

Les réceptacles 22 logés dans les alvéoles 20 sont typiquement des bacs ou des plateaux en matière plastique. Les réceptacles 22 sont typiquement de forme parallélépipédique. Les réceptacles peuvent contenir un ou plusieurs articles de sorte que la masse totale du réceptacle 22 et du ou des articles soit comprise entre 1.5 kg et 30 kg.

Une flotte de véhicules autonomes 30 assure le transport des réceptacles 22 depuis les alvéoles 20 vers un poste de préparation de commande 32. Un exemple de véhicule autonome 30 est illustré à la figure 3.

Chaque véhicule autonome 30 est ici du type « à guidage automatique » ou AGV (de l'anglais « Automated Guided Vehicle »). A cet effet, le véhicule autonome 30 comprend une électronique de commande (non illustrée). L'électronique de commande peut recevoir des instructions de réceptacles 22 à collecter et calculer un itinéraire entre la position du véhicule autonome 30 et la position de l'alvéole 20 contenant le réceptacle 22 à collecter. Le véhicule autonome 30 comprend alors un système de guidage 34, en l'occurrence par laser, pour se guider dans l'entrepôt et collecter le réceptacle 22 en question. Alternativement, le système de guidage 34 pourrait comprendre de moyens de suivi de marquage au sol. L'aire de stockage 12 comprend alors un marquage au sol formant un tracé de guidage. Le marquage au sol peut par exemple comprendre des bandes rectilignes selon la première direction horizontale X1 et des bandes rectilignes selon la deuxième direction horizontale X2.

Pour réaliser les déplacements au sol selon les deux directions horizontales X1, X2, chaque véhicule autonome 30 comprend un châssis 36, typiquement de forme parallélépipédique et un ou plusieurs moyens de roulage 38. Dans l'exemple illustré, le véhicule autonome 30 comprend deux moyens de roulage 38 agencés d'un côté inférieur avant et d'un côté inférieur arrière du châssis 36. Dans ce cas, le véhicule autonome 30 peut comprendre deux roulements latéraux 40 agencés des deux côtés inférieurs latéraux, pour assurer l'équilibre isostatique du véhicule autonome 30. Alternativement, le véhicule autonome 30 peut comprendre quatre moyens de roulage 38, chaque moyen de roulage 38 étant agencé au niveau d'un coin inférieur du châssis 36.

Chaque moyen de roulage 38 comprend une roue 42 présentant un axe de révolution perpendiculaire à la direction verticale et une chape 44 sur laquelle la roue 42 est montée pivotante autour de l'axe de révolution. Des moyens d'entrainement (non illustrés), notamment un ensemble de pignons, permettent d'entrainer en rotation la roue 42 autour de son axe de révolution par rapport au châssis 36. Le véhicule autonome 30 comprend un actionneur relié à chaque moyen d'entrainement. Alternativement, chaque moyen de roulage 38 peut comprendre un actionneur respectif pour actionner les moyens d'entrainement.

Chaque moyen de roulage 38 comprend en outre des moyens de changement de la direction de déplacement (non illustrés). Ces moyens de changement de direction de déplacement comprennent des moyens de pivotement pour pivoter la roue 42 autour d'un axe vertical par rapport au châssis 36. Chaque moyen de roulage 38 comprend ici un actionneur pour actionner les moyens de pivotement. Alternativement, il peut être prévu un actionneur unique pour actionner les moyens de pivotement de chaque ensemble de roulage 38.

Les moyens de roulage 38 peuvent être configurés pour opérer en champ libre au sol qui est dépourvu de rails de guidage, notamment suivant les deux directions horizontales X1, X2. De tels moyens de roulage 38 permettent une installation plus rapide et plus flexible du système de stockage et de récupération d'articles 10. En outre, l'empreinte sonore est aussi réduite pour le confort des opérateurs humains qui opèrent dans l'entrepôt.

Pour réaliser des déplacements selon la direction verticale Z et se positionner verticalement au niveau d'une alvéole 20 contenant un réceptacle 22 à collecter, chaque véhicule autonome 30 comprend des moyens de grimpe 46. Les moyens de grimpe 46 comprennent une ou plusieurs roues dentées 48, chacune étant configurée pour déplacer le véhicule autonome 30 le long d'un montant 16 de rack de stockage 14, en coopérant avec un organe de grimpe 50 du montant 16. Ici, chaque rack de stockage 14 comprend un organe de grimpe 50, en l'occurrence une crémaillère ou une chaine à maillons, s'étendant verticalement le long de chaque montant 16. L'organe de grimpe 50 est solidaire du montant 16 respectif. A la montée ou à la descente, un mouvement de rotation de chaque roue dentée 48 des moyens de grimpe 46 est converti en un mouvement du véhicule autonome 30 verticalement le long des montants 16.

Les moyens de grimpe 46 comprennent au moins une première roue dentée 48 pouvant coopérer avec l'organe de grimpe 50 de l'un des montants 16 d'un premier rack de stockage 14 et une deuxième roue dentée 48 pouvant coopérer avec l'organe de grimpe 50 de l'un des montants 16 d'un deuxième rack de stockage 14 adjacent du premier rack de stockage 14, les montants 16 étant en regard l'un de l'autre selon la deuxième direction horizontale X2.

En l'espèce, les moyens de grimpe 46 comprennent quatre roues dentées 48, dont :
- deux roues dentées 48 peuvent coopérer avec deux montants 16 d'un premier rack de stockage 14, les deux montants 16 du premier rack de stockage 14 étant consécutifs selon la première direction horizontale X1;
- deux roues dentées 48 peuvent coopérer avec deux montants 16 d'un deuxième rack de stockage 14 adjacent au premier rack de stockage 14 selon la deuxième direction horizontale X2, les deux montants 16 du deuxième rack de stockage 14 étant consécutifs selon la première direction horizontale X1 et en vis-à-vis respectivement de l'un des montants consécutifs du premier rack de stockage 14 selon la deuxième direction horizontale X2.

Chaque roue dentée 48 des moyens de grimpe 46 peut être mobile entre une position rétractée dans laquelle la roue dentée 48 est logée dans ou au-dessus du châssis 36 et une position déployée dans laquelle la roue dentée 48 fait saillie latéralement du châssis 36. A cet effet, les moyens de grimpe 46 comprennent un mécanisme de déploiement 52 pour déployer la ou les roues dentées 48. Dans la position rétractée, le véhicule autonome 30 présente une largeur qui est inférieure à une distance séparant deux paires de montants 16 consécutives selon la deuxième direction horizontale X2 voire facultativement selon la première direction horizontale X1. Le véhicule autonome 30 peut circuler librement dans les allées Ai s'étendant selon la première direction horizontale X1 voire facultativement au travers des passages Pi (facultatifs) s'étendant selon la deuxième direction horizontale X2.

Afin de charger un réceptacle 22 à collecter sur le véhicule autonome 30, le véhicule autonome 30 comprend des moyens de préhension 54. Les moyens de préhension 54 comprennent un bras rétractable 56 adapté à être déployé dans l'alvéole 20 du rack de stockage 14. Le bras rétractable 56 est déployable selon la deuxième direction horizontale X2 (ici, la deuxième direction horizontale X2 forme une direction de chargement/déchargement). Le bras rétractable 56 est déployé dans l'ouverture de chargement 26 des alvéoles 20 faisant face au véhicule autonome 30, vers le fond 28 des alvéoles 20. Un actionneur permet le déploiement ou la rétractation du bras déployable 56. Le bras rétractable 56 est adapté à extraire le réceptacle 22 de l'alvéole 20 et à le charger sur une surface supérieure du châssis 36.

En outre, le véhicule autonome 30 est alimenté par une source autonome d'énergie électrique (non illustrée). La source d'énergie est nommant une batterie embarquée sur le châssis 36. Le véhicule autonome 30 peut notamment se recharger en venant se connecter à une borne de recharge disposée dans l'entrepôt.

Chaque véhicule autonome 30 comprend un capotage 58 adapté à protéger les composants du véhicule autonome 30. Le capotage 58 s'étend selon la direction verticale Z depuis les quatre flancs du châssis 36 pour recouvrir les composants internes embarqués sur le châssis 36. Le capotage 58 comprend ici une pluralité de coques. En particulier, des coques latérales 60, montées sur les flancs latéraux du châssis 36 sur lesquels sont prévus les moyens de grimpe 46 sont mobiles. Le mécanisme de déploiement 52, lorsqu'il déplace la ou les roues dentées 48, déplace également les coques 60 du capotage 58. Lorsque les moyens de grimpe 46 sont déployés, les coques 60 sont également déployées pour faire saillie latéralement par rapport au châssis 36.

Chaque coque latérale 60 forme un déflecteur 60 adapté à repousser les réceptacles 22 faisant saillie des alvéoles 20 vers le fond des alvéoles 20. Dans une position nominale de chaque réceptacle 22 dans l'alvéole 20, une distance D (mesurée selon la deuxième direction horizontale X2) séparant une extrémité arrière du réceptacle 22 et le fond 28 de l'alvéole 20 peut être comprise entre 8 et 12 mm. Lorsque le réceptacle 22 est déplacé selon la deuxième direction horizontale X2 hors de la position nominale, le réceptacle 22 peut faire saillie de l'ouverture de chargement 26 des alvéoles 20. Ce déplacement relatif entre le réceptacle et les équerres 24 peut être typiquement causé par les vibrations du rack de stockage. Le déflecteur 60 déployé est interposé entre le châssis 36 et les ouvertures de chargement 26 des alvéoles 20. Une surface de guidage 62 du déflecteur 60 vient au contact des réceptacles 22 déplacés, par exemple déplacés d'une distance de plus de 10 mm hors de la position nominale. La surface de guidage 62 est inclinée par rapport à la direction verticale Z pour permettre de repousser les réceptacles 22 vers le fond des alvéoles 20 pour retrouver la position nominale.

Dans une configuration alternative, la ou les coques sont distinctes du déflecteur.

Comme plus visible sur les figures 4 et 5, chaque coque latérale 60 comprend une première section de guidage inclinée 64, supérieure. La première section de guidage inclinée 64 s'étend depuis un premier point P1 formant l'extrémité supérieure du déflecteur 60 et un deuxième point P2 en dessous du premier point P1 selon la direction verticale Z. La droite reliant les premier et deuxième points P1, P2 peut former, avec l'axe vertical Z du châssis 36, un angle 1 compris entre 5° et 20°. En outre, la hauteur H1 de la première section de guidage inclinée 64, mesurée selon la direction verticale Z, peut être comprise entre 60 et 100 mm. La première section de guidage inclinée 64 forme une pente entre les premiers et deuxième points P1, P2 faisant saillie latéralement depuis le châssis 36. La pente permet de guider les réceptacles 22 vers la position nominale lors d'une ascension du véhicule autonome 30 selon la direction verticale Z.

Chaque coque latérale 60 peut comprendre ici une deuxième section de guidage inclinée 66, inférieure. La deuxième section de guidage 66 s'étend depuis le troisième point P3 jusqu'à un quatrième point P4 formant l'extrémité inférieure de la coque latérale 60. Ici, les deuxième et troisième points P1, P3 sont confondus. La deuxième section de guidage inclinée 66 s'étend dans la continuité de la première section de guidage inclinée 64 selon la direction verticale Z. La droite reliant les troisième et quatrième points P3, P4 peut former avec l'axe vertical Z du châssis 36 un angle a2 compris entre 5° et 20°. La hauteur H2 de la deuxième portion de guidage 66, mesurée selon la direction verticale Z, peut être comprise entre 60 mm et 100 mm. La deuxième section de guidage inclinée 66 forme une pente entre le troisième et le quatrième point P3, P4 adaptée à guider les réceptacles 22 vers la position nominale lors d'une descente du véhicule autonome 30 selon la direction verticale Z.

Chaque coque latérale 60 est notamment une coque plastique à paroi mince, par exemple formée par moulage par injection. Chaque coque latérale 60 peut par exemple être en polycarbonate. Alternativement, chaque coque latérale 60 pourrait être une coque métallique, par exemple en aluminium. L'épaisseur de chaque coque latérale 60 peut être comprise entre 1 mm et 3 mm. Les coques latérales 60 ont une rigidité suffisante pour résister aux chocs contre les réceptacles 22, notamment lorsque le véhicule autonome 30 se déplace à une vitesse selon la direction verticale allant jusqu'à 3 m/s, et que la masse combinée des réceptacles 22 et des articles est comprise entre 1,5 et 30 kg.

On décrit par la suite un procédé de récupération d'un réceptacle 100 mis en œuvre dans le système de stockage et de récupération d'article 10 décrit ci-avant.

Le procédé 100 comprend une première étape 101. La première étape 101 comprend l'association d'un véhicule autonome 30a se situant à une position initiale dans l'entrepôt à un réceptacle à collecter 22a dans l'aire de stockage 12. Le réceptacle à collecter 22a est disposé à l'intérieur d'une alvéole de collecte 20a parmi la pluralité des alvéoles 20 de l'aire de stockage 12. Le réceptacle à collecter 22a comprend un ou plusieurs articles à collecter en vue de la préparation d'une commande.

La première étape 101 peut comprendre une première étape subsidiaire de sélection du réceptacle à collecter 22a dans l'aire de stockage 12, permettant d'établir la position de l'alvéole de collecte 20a. La position de l'alvéole de collecte 20a peut être établie par l'allée Ai desservant le rack de stockage 14 dans laquelle se situe l'alvéole de collecte 20a, la colonne 18 du rack de stockage 14 dans laquelle se situe l'alvéole de collecte 20a et le niveau auquel se situe l'alvéole de collecte 20a le long du rack de stockage 14.

La première étape 101 peut comprendre une deuxième étape subsidiaire comprenant la mise en place d'une communication avec le véhicule autonome 30a se situant dans la position initiale, par exemple au moyen d'un réseau de communication sans fil tel que WiFi ; WiMAX, IWLAN, GSM, GPRS, UMTS (marques déposées).

Le procédé 100 comprend une deuxième étape 102. La deuxième étape 102 comprend l'envoi d'instructions à l'unité de commande électronique du véhicule autonome 30a. Les instructions comprennent la position de l'alvéole de collecte 20a et des instructions de calculer un itinéraire entre la position initiale du véhicule autonome 30a et la position de l'alvéole de collecte 20a. L'itinéraire calculé comprend ici un déplacement du véhicule autonome 30 selon la première direction horizontale X1 (ou plusieurs déplacements selon la première direction horizontale X1), et/ou un déplacement selon la deuxième direction horizontale X2 (ou plusieurs déplacements selon la deuxième direction horizontale X2). Aussi, l'itinéraire est calculé en fonction de la position courante et/ou planifiée des autres véhicules autonomes 30 disposés dans l'entrepôt. La trajectoire est établie sans risquer de collision avec l'un des autres véhicules autonomes 30. A cet effet, il peut être prévu l'envoi en temps réel à l'électronique de commande de la position courante des autres véhicules autonomes 30 de la flotte et/ou de leurs trajectoires de déplacement planifiées.

Alternativement, la deuxième étape 102 peut être remplacée par le calcul de l'itinéraire entre la position initiale du véhicule autonome 30a et la position de l'alvéole de collecte 20a par une unité centrale de commande située à distance du véhicule autonome 30a et par l'envoi de l'itinéraire au véhicule autonome 30a.

Le procédé 100 comprend une troisième étape 103. La troisième étape 103 comprend le déplacement du véhicule autonome 30a au sol selon les deux directions horizontales X1, X2.

La troisième étape 103 peut comprendre le déplacement du véhicule autonome 30a au sol au moins selon la première direction horizontale X1 de manière à aligner le véhicule autonome 30a, selon la deuxième direction horizontale X2, avec le passage Pi de l'aire de stockage 12 menant à la colonne 18 dans laquelle se situe l'alvéole de collecte 20a.

La troisième étape 103 peut comprendre une deuxième étape subsidiaire comprenant le déplacement du véhicule autonome 30a au sol selon la deuxième direction horizontale X2 dans le passage Pi de l'aire de stockage 10 qui conduit à la colonne 18 dans laquelle se situe l'alvéole de collecte 20a.

Les déplacements selon la première et la deuxième direction horizontale X1, X2 peuvent être répétés une ou plusieurs fois. A l'issu de la troisième étape 103, le véhicule autonome 30a se trouve aligné avec les organes de grimpe 50 du rack de stockage 14 formant la colonne 18 comprenant l'alvéole de collecte 20a.

Le procédé 100 comprend une quatrième étape 104. La quatrième étape 104 comprend le couplage des moyens de grimpe 46 du véhicule autonome 30a aux organes de grimpe 50 du rack de stockage 14 comportant l'alvéole de collecte 20a.

La quatrième étape 104 peut comprendre une étape subsidiaire de déploiement des moyens de grimpe 46. Ici, chaque roue dentée 48 des moyens de grimpe 46 est déployée de la position rétractée vers la position déployée pour être couplé à la crémaillère ou la chaine à maillon formant l'organe de grime 50. En l'occurrence, le déflecteur 60 est déployé avec chaque roue dentée 48.

Le procédé 100 comprend une cinquième étape 105. La cinquième étape 105 comprend le déplacement du véhicule autonome 30a selon la direction verticale Z. Le véhicule autonome 30a se déplace le long du montant 16 du rack de stockage 14 par coopération entre les moyens de grimpe 46 du véhicule autonome 30a et les organes de grimpe 50 des racks de stockage 14, en l'occurrence par rotation de chaque roue dentée 48 et la crémaillère ou la chaine à maillon auquel la roue dentée 48 est couplée. Le déplacement selon la direction verticale Z est effectué de manière à aligner verticalement le véhicule autonome 30a au niveau de l'alvéole de collecte 20a contenant le réceptacle à collecter 22a.

Pendant la cinquième étape 105 de déplacement du véhicule autonome 30a selon la direction verticale Z, le déflecteur 60 repousse les réceptacles 20 faisant saillie des alvéoles de stockage 22. La surface de guidage du déflecteur 60 vient au contact des réceptacles pour les repositionner dans leur position nominale dans les alvéoles 20.

Le procédé 100 comprend une sixième étape 106. La sixième étape 106 comprend le chargement du réceptacle à collecter 22a retenu dans l'alvéole de collecte 20a sur la surface supérieure châssis 36. Les moyens de préhension 54 sont déployés dans l'alvéole de collecte 20a pour appréhender le réceptacle à collecter 22a et le positionner sur la surface supérieure.

Le procédé comprend une septième étape 107. La septième étape 107 comprend le déplacement du véhicule autonome 30a selon la direction verticale Z jusqu'à ce que le véhicule autonome 30a se retrouve au niveau du sol. Comme pour la quatrième étape 104, le véhicule autonome 30a se déplace par coopération entre les moyens de grimpe 46 du véhicule autonome 30a et les organes de grimpe 50 des racks de stockage 14.

Ici encore, pendant la septième étape 107 de déplacement du véhicule autonome 30a selon la direction verticale Z, le déflecteur 60 repousse les réceptacles 22 faisant saillie des alvéoles de stockage 20.

Le procédé 100 comprend une huitième étape 108. La huitième étape 108 comprend le découplage des moyens de grimpe 46 et des organes de grimpe 50.

La huitième étape 108 peut comprend une étape subsidiaire de repliement de chaque roue dentée 48 des moyens grimpe 46 vers le châssis 36. Chaque roue dentée 48 des moyens de grimpe 46 est repliée de la position déployée à la position repliée. Le repliement de chaque roue dentée 48 assure également le repliement du déflecteur 60 vers le châssis 36.

Le procédé 100 comprend une neuvième étape 109. La neuvième étape 109 comprend le déplacement du véhicule autonome 30a au sol selon la première direction horizontale X1 et la deuxième direction horizontale X2, jusqu'à ce que le véhicule autonome se retrouve au poste de préparation de commande 32.

La neuvième étape 109 peut comprendre une première étape subsidiaire comprenant le déplacement du véhicule autonome 30a au sol selon la deuxième direction horizontale X2 dans le passage Pi de l'aire de stockage 10 pour sortir de l'aire de stockage 12.

La neuvième étape 109 peut comprendre une deuxième étape subsidiaire de déplacement du véhicule autonome 30a selon la première direction horizontale X1 et/ou la deuxième direction horizontale de manière à accéder au poste de préparation de commande 32.

## Revendications

1. Véhicule autonome (30) pour système de stockage et de récupération d'articles (ASRS) (10), le véhicule autonome (30) étant configuré pour se déplacer dans une aire de stockage (12) pour collecter un réceptacle (22a) parmi une pluralité de réceptacles (22) stockés dans l'aire de stockage (12), chaque réceptacle (22) étant disposé à l'intérieur d'une alvéole (20) de l'aire de stockage (12), les alvéoles (20) étant réparties suivant deux directions horizontales (X1, X2) et selon une direction verticale (Z), le véhicule autonome (30) comprenant :
- un châssis (36) ;
- des moyens de roulage (38) adaptés à déplacer le châssis (36) selon les deux directions horizontales (X1, X2) ;
- des moyens de grimpe (46) adaptés pour déplacer le châssis (36) selon la direction verticale (Z);
- des moyens de préhension (54) aptes à saisir le réceptacle (22a) ; **caractérisé en ce que** le véhicule autonome comprend également:
- au moins un déflecteur (60) monté latéralement sur le châssis (36), le déflecteur (60) présentant une surface de guidage (62), externe, inclinée par rapport à la direction verticale (Z), configurée pour repousser les réceptacles (22) vers un fond (28) des alvéoles (20) lors du déplacement du châssis (36) selon la direction verticale (Z).

2. Véhicule autonome (30) selon la revendication 1, dans lequel le châssis (36) embarque des composants internes comportant au moins une électronique de commande, un ou plusieurs actionneurs des moyens de roulage, et une source autonome d'énergie électrique, ledit châssis (36) comportant un capotage (58) comportant une ou plusieurs coques, recouvrant le châssis (36) en cachant au moins partiellement les composants internes, et dans lequel ledit au moins un déflecteur (60) est la coque ou l'une au moins des coques du capotage, recouvrant un flanc du châssis (36), s'étendant selon la direction verticale (Z) en faisant saillie vers l'extérieur du châssis (36).

3. Véhicule autonome (30) selon la revendication 1, dans lequel le châssis (36) embarque des composants internes comportant au moins une électronique de commande, un ou plusieurs actionneurs des moyens de roulage, et une source autonome d'énergie électrique, ledit châssis (36) comportant un capotage (58) comportant une ou plusieurs coques, recouvrant le châssis (36) en cachant au moins partiellement les composants internes, et dans lequel ledit au moins un déflecteur (60) est distinct de la coque ou des coques du capotage.

4. Véhicule autonome (30) selon l'une des revendications 1 à 3, dans lequel la surface de guidage (62) s'étend selon la direction verticale (Z) et comprend une section de guidage inclinée (64) configurée pour repousser les réceptacles (22) vers le fond (28) des alvéoles (20) lors d'une ascension selon la direction verticale (Z).

5. Véhicule autonome selon la revendication 4, dans lequel la section de guidage inclinée (64) configurée pour repousser les réceptacles (22) vers le fond (28) des alvéoles (20) lors d'une ascension selon la direction verticale (Z) s'étend entre un premier point (P1) disposé à une extrémité supérieure du déflecteur (60) et un deuxième point (P2) disposé entre l'extrémité supérieure et une extrémité inférieure du déflecteur (60), la droite reliant les premier et deuxième points (P1, P2) formant avec un axe vertical s'étendant selon la direction verticale (Z), un angle (a1) compris entre 5° et 20°.

6. Véhicule autonome (30) selon la revendication 5, dans lequel une hauteur (H1) mesurée selon la direction verticale (Z) entre le premier point et le deuxième point (P1, P2) est comprise entre 60 mm et 100 mm.

7. Véhicule autonome (30) selon l'une des revendications 4 à 6, dans lequel la surface de guidage (60) comporte :
- ladite section de guidage inclinée (64) configurée pour repousser les réceptacles (22) vers le fond (28) des alvéoles (20) lors d'une ascension selon la direction verticale qui est une première section de guidage (64) ; et
- une deuxième section de guidage inclinée (66), disposée inférieure à la première section (64) selon la direction verticale (Z), configurée pour repousser les réceptacles (20) vers le fond (28) des alvéoles (20) lors d'une descente du véhicule autonome (30) selon la direction verticale (Z).

8. Véhicule autonome (30) selon la revendication 7, en combinaison avec les revendications 4 ou 5, dans lequel la deuxième section de guidage inclinée (66) s'étend entre un troisième point (P3), éventuellement confondu avec le deuxième point (P2), et un quatrième point (P4) disposé à l'extrémité inférieure du déflecteur (60), la droite reliant les troisième et quatrième points (P3, P4) formant avec la direction verticale (Z) un angle compris entre 5° et 20°, et, de préférence, une hauteur (H2) mesurée selon la direction verticale (Z) entre le troisième point et le quatrième point (P3, P4) est comprise entre 60 mm et 100 mm..

9. Véhicule autonome (30) selon la revendication 2 seule ou prise en combinaison avec l'une des revendications 3 à 8, dans lequel la coque (60) est une structure plastique ou métallique à paroi mince.

10. Véhicule autonome (30) selon l'une quelconque des revendications précédentes, dans lequel le véhicule autonome (30) comprend deux déflecteurs (60) montés sur deux flancs opposés du châssis (36).

11. Véhicule autonome (30) selon l'une quelconque des revendications précédentes, dans lequel les moyens de grimpe (46) comportent :
- au moins une roue dentée (48), motorisée, de préférence deux roues dentées (48), agencée latéralement sur le châssis (36), du même côté que le déflecteur (60), ladite au moins une roue dentée (48) étant configurée pour s'engrener avec un organe de grimpe (50) comprenant une crémaillère ou une chaine à maillon s'étendant suivant la direction verticale (Z),
- un mécanisme de déploiement (52) configuré pour déployer et rétracter ladite au moins une roue dentée (48) par rapport au châssis (36), ladite au moins une roue dentée (48) passant d'une position rétractée, destinée à découpler la roue dentée (48) de l'organe de grimpe (50), jusqu'à une position déployée, configurée pour coupler ladite roue dentée (48) audit organe de grimpe (50), et dans lequel ledit mécanisme de déploiement (52) est configuré pour déployer et rétracter le déflecteur (60) conjointement au déploiement et à la rétractation de ladite au moins une roue dentée (48).

12. Véhicule autonome (30) selon l'une des revendications 1 à 11 dans lequel moyens de roulage (38) comprennent au moins une roue (42) adaptée au déplacement du châssis (36) et des moyens de changement de direction adapté à changer l'orientation de la roue (42).

13. Système de stockage et de récupération d'articles (10) comprenant :
- une pluralité de racks de stockage (14) disposés dans une aire de stockage (12) suivant deux directions horizontales (X1, X2), chaque rack de stockage (14) s'étendant selon une direction verticale (Z), les racks de stockage (14) comportant :
∘ une pluralité alvéoles (20) suivant la direction verticale (Z), les alvéoles (20) présentant des ouvertures de chargement ou déchargement (26) de réceptacles (22) suivant une direction de chargement de déchargement horizontale (X2), et
∘ des organes de grimpe (50), verticaux,
- une pluralité de réceptacles (22) disposés dans les alvéoles (20) de chaque rack de stockage (14),
- au moins un véhicule autonome (30) selon l'une quelconque des revendications précédentes, comportant les moyens de grimpe (46) configurés pour être couplés aux organes de grimpe (50) pour assurer le déplacement vertical du châssis (36), lequel ledit au moins déflecteur (60) fait face aux ouvertures de chargement ou déchargement (26) des alvéoles (20) du rack de stockage (14) lorsque le châssis (36) se déplace le long de la direction verticale (Z), ledit au moins un déflecteur (60) interposé entre les ouvertures de chargement (26) du rack de stockage (14) et le châssis (36) du véhicule autonome (30).

14. Système (10) selon la revendication 13, dans lequel dans une position nominale du réceptacle (22) dans l'alvéole (20), une distance (D) entre une extrémité arrière du réceptacle (22) et le fond (28) de l'alvéole (20) est comprise entre 8 et 12 mm, et le véhicule autonome (30) est configuré pour replacer le réceptacle (22) dans la position nominale à partir d'un déplacement de 10 mm du réceptacle (22) depuis la position nominale, et, de préférence, chaque réceptacle (22) est adapté à recevoir au moins un article, le réceptacle (22) et l'au moins un article ayant de préférence une masse comprise entre 1,5 kg et 30 kg .

15. Procédé de récupération d'un réceptacle (22) mis en œuvre dans un système de stockage et de récupération d'articles (10) selon l'une des revendications 13 à 14, comprenant :
- Associer un véhicule autonome (30a) parmi le au moins un véhicule autonome (30) à un réceptacle à récupérer (22a) dans l'aire de stockage (12) ;
- Déplacer le véhicule autonome (30a) selon les deux directions horizontales (X1 ; X2) jusqu'à ce que le véhicule autonome (30a) soit aligné avec des organes de grimpe verticaux (50) d'un des racks de stockage (14) recevant le réceptacle à récupérer (22a);
- Coupler les moyens de grimpe (46) du véhicule autonome (30a) aux organes de grimpe (50) du rack de stockage (14) ;
- Déplacer le véhicule autonome (30a) selon la direction verticale (Z) jusqu'à ce que le véhicule autonome (30a) se situe verticalement au niveau du réceptacle à récupérer (22a), et, pendant le déplacement du véhicule autonome (30a) selon la direction verticale (Z), repousser des réceptacles (22) faisant saillie des alvéoles (20) vers le fond (28) des alvéoles (20) par contact entre les réceptacles (22) et le déflecteur (60) du véhicule autonome (30), et, de préférence, le véhicule autonome (30) se déplace selon la direction verticale à une vitesse comprise entre 0 m/s et 3 m/s..

## Patentansprüche

1. Autonomes Fahrzeug (30) für ein System zur Lagerung und Entnahme von Gegenständen (ASRS) (10), wobei das autonome Fahrzeug (30) konfiguriert ist, um sich in einem Lagerbereich (12) zu bewegen, um einen Behälter (22a) aus einer Vielzahl von in dem Lagerbereich (12) gelagerten Behältern (22) zu entnehmen, wobei jeder Behälter (22) im Inneren eines Fachs (20) des Lagerbereichs (12) angeordnet ist, wobei die Fächer (20) entlang zweier horizontaler Richtungen (X1, X2) und entlang einer vertikalen Richtung (Z) verteilt sind, wobei das autonome Fahrzeug (30) umfasst:
• ein Chassis (36);
• Fahrmittel (38), die geeignet sind, um das Chassis (36) entlang der beiden horizontalen Richtungen (X1, X2) zu bewegen;
• Klettermittel (46), die geeignet sind, um das Chassis (36) entlang der vertikalen Richtung (Z) zu bewegen;
• Greifmittel (54), die in der Lage sind, den Behälter (22a) zu greifen;
**gekennzeichnet dadurch, dass** das autonome Fahrzeug ferner umfasst:
• mindestens einen seitlich an dem Chassis (36) montierten Deflektor (60), wobei der Deflektor (60) eine äußere, bezüglich der vertikalen Richtung (Z) geneigte Führungsfläche (62) aufweist, die konfiguriert ist, um die Behälter (22) bei der Bewegung des Chassis (36) entlang der vertikalen Richtung (Z) in Richtung eines Bodens (28) der Fächer (20) zurückzustoßen.

2. Autonomes Fahrzeug (30) nach Anspruch 1, wobei das Chassis (36) interne Komponenten aufnimmt, die mindestens eine Steuerelektronik, einen oder mehrere Aktuatoren der Fahrmittel und eine autonome elektrische Energiequelle einschließen, wobei das Chassis (36) eine Verkleidung (58) einschließt, die eine oder mehrere Schalen einschließt, die das Chassis (36) abdecken und die internen Komponenten zumindest teilweise verbergen, und wobei der mindestens eine Deflektor (60) die Schale oder mindestens eine der Schalen der Verkleidung ist, die eine Flanke des Chassis (36) abdeckt und sich entlang der vertikalen Richtung (Z) erstreckt, indem sie aus dem Chassis (36) nach außen ragt.

3. Autonomes Fahrzeug (30) nach Anspruch 1, wobei das Chassis (36) interne Komponenten aufnimmt, die mindestens eine Steuerelektronik, einen oder mehrere Aktuatoren der Fahrmittel und eine autonome elektrische Energiequelle einschließen, wobei das Chassis (36) eine Verkleidung (58) einschließt, die eine oder mehrere Schalen einschließt, die das Chassis (36) abdecken und die internen Komponenten zumindest teilweise verbergen, und wobei der mindestens eine Deflektor (60) von der Schale oder den Schalen der Verkleidung verschieden ist.

4. Autonomes Fahrzeug (30) nach einem der Ansprüche 1 bis 3, wobei sich die Führungsfläche (62) entlang der vertikalen Richtung (Z) erstreckt und einen geneigten Führungsabschnitt (64) umfasst, der konfiguriert ist, um die Behälter (22) während eines Aufstiegs entlang der vertikalen Richtung (Z) in Richtung des Bodens (28) der Fächer (20) zurückzustoßen.

5. Autonomes Fahrzeug nach Anspruch 4, wobei sich der geneigte Führungsabschnitt (64), der konfiguriert ist, um die Behälter (22) während eines Aufstiegs entlang der vertikalen Richtung (Z) in Richtung des Bodens (28) der Fächer (20) zurückzustoßen, zwischen einem ersten Punkt (P1), der an einem oberen Ende des Deflektors (60) angeordnet ist, und einem zweiten Punkt (P2), der zwischen dem oberen Ende und einem unteren Ende des Deflektors (60) angeordnet ist, erstreckt, wobei die den ersten und den zweiten Punkt (P1, P2) verbindende Gerade mit einer sich entlang der vertikalen Richtung (Z) erstreckenden vertikalen Achse einen Winkel (a1) zwischen 5° und 20° bildet.

6. Autonomes Fahrzeug (30) nach Anspruch 5, wobei eine entlang der vertikalen Richtung (Z) zwischen dem ersten Punkt (P1) und dem zweiten Punkt (P2) gemessene Höhe (H1) zwischen 60 mm und 100 mm liegt.

7. Autonomes Fahrzeug (30) nach einem der Ansprüche 4 bis 6, wobei die Führungsfläche (60) einschließt:
• den geneigten Führungsabschnitt (64), der konfiguriert ist, um die Behälter (22) während eines Aufstiegs entlang der vertikalen Richtung in Richtung des Bodens (28) der Fächer (20) zurückzustoßen, welcher ein erster Führungsabschnitt (64) ist; und
• einen zweiten geneigten Führungsabschnitt (66), der entlang der vertikalen Richtung (Z) niedriger als der erste Abschnitt (64) angeordnet und konfiguriert ist, um die Behälter (20) während eines Abstiegs des autonomen Fahrzeugs (30) entlang der vertikalen Richtung (Z) in Richtung des Bodens (28) der Fächer (20) zurückzustoßen.

8. Autonomes Fahrzeug (30) nach Anspruch 7, in Kombination mit den Ansprüchen 4 oder 5, wobei sich der zweite geneigte Führungsabschnitt (66) zwischen einem dritten Punkt (P3), der gegebenenfalls mit dem zweiten Punkt (P2) zusammenfällt, und einem vierten Punkt (P4), der am unteren Ende des Deflektors (60) angeordnet ist, erstreckt, wobei die den dritten und den vierten Punkt (P3, P4) verbindende Gerade mit der vertikalen Richtung (Z) einen Winkel zwischen 5° und 20° bildet, und vorzugsweise eine entlang der vertikalen Richtung (Z) zwischen dem dritten Punkt und dem vierten Punkt (P3, P4) gemessene Höhe (H2) zwischen 60 mm und 100 mm liegt.

9. Autonomes Fahrzeug (30) nach Anspruch 2 allein oder in Kombination mit einem der Ansprüche 3 bis 8, wobei die Schale (60) eine dünnwandige Kunststoff- oder Metallstruktur ist.

10. Autonomes Fahrzeug (30) nach einem der vorhergehenden Ansprüche, wobei das autonome Fahrzeug (30) zwei Deflektoren (60) umfasst, die an zwei gegenüberliegenden Flanken des Chassis (36) montiert sind.

11. Autonomes Fahrzeug (30) nach einem der vorhergehenden Ansprüche, wobei die Klettermittel (46) einschließen:
• mindestens ein motorisiertes Zahnrad (48), vorzugsweise zwei Zahnräder (48), das/die seitlich an dem Chassis (36) auf derselben Seite wie der Deflektor (60) angeordnet ist/sind, wobei das mindestens eine Zahnrad (48) konfiguriert ist, um mit einem Kletterelement (50) in Eingriff zu gelangen, das eine Zahnstange oder eine Gliederkette umfasst, die sich entlang der vertikalen Richtung (Z) erstreckt,
• einen Ausfahrmechanismus (52), der konfiguriert ist, um das mindestens eine Zahnrad (48) bezüglich des Chassis (36) auszufahren und einzufahren, wobei das mindestens eine Zahnrad (48) von einer eingefahrenen Position, die dazu bestimmt ist, das Zahnrad (48) von dem Kletterelement (50) zu entkoppeln, bis zu einer ausgefahrenen Position übergeht, die konfiguriert ist, um das Zahnrad (48) mit dem Kletterelement (50) zu koppeln,
und wobei der Ausfahrmechanismus (52) konfiguriert ist, um den Deflektor (60) gemeinsam mit dem Ausfahren und Einfahren des mindestens einen Zahnrads (48) auszufahren und einzufahren.

12. Autonomes Fahrzeug (30) nach einem der Ansprüche 1 bis 11, wobei die Fahrmittel (38) mindestens ein Rad (42), das für die Bewegung des Chassis (36) geeignet ist, und Richtungsänderungsmittel umfassen, die geeignet sind, die Ausrichtung des Rads (42) zu ändern.

13. System zur Lagerung und Entnahme von Gegenständen (10), umfassend:
• eine Vielzahl von Lagerregalen (14), die in einem Lagerbereich (12) entlang zweier horizontaler Richtungen (X1, X2) angeordnet sind, wobei sich jedes Lagerregal (14) entlang einer vertikalen Richtung (Z) erstreckt, wobei die Lagerregale (14) einschließen:
• eine Vielzahl von Fächern (20) entlang der vertikalen Richtung (Z), wobei die Fächer (20) Lade- oder Entladeöffnungen (26) für Behälter (22) entlang einer horizontalen Lade- und Entladerichtung (X2) aufweisen, und
• vertikale Kletterelemente (50),
• eine Vielzahl von Behältern (22), die in den Fächern (20) jedes Lagerregals (14) angeordnet sind,
• mindestens ein autonomes Fahrzeug (30) nach einem der vorhergehenden Ansprüche, einschließlich der Klettermittel (46), die konfiguriert sind, um mit den Kletterelementen (50) gekoppelt zu werden, um die vertikale Bewegung des Chassis (36) zu gewährleisten, wobei der mindestens eine Deflektor (60) den Lade- oder Entladeöffnungen (26) der Fächer (20) des Lagerregals (14) zugewandt ist, wenn sich das Chassis (36) entlang der vertikalen Richtung (Z) bewegt, wobei der mindestens eine Deflektor (60) zwischen den Ladeöffnungen des Lagerregals (14) und dem Chassis (36) des autonomen Fahrzeugs (30) angeordnet ist.

14. System (10) nach Anspruch 13, wobei in einer Nennposition des Behälters (22) in dem Fach (20) ein Abstand (D) zwischen einem hinteren Ende des Behälters (22) und dem Boden (28) des Fachs (20) zwischen 8 und 12 mm liegt, und das autonome Fahrzeug (30) konfiguriert ist, um den Behälter (22) ausgehend von einer Verschiebung des Behälters (22) um 10 mm aus der Nennposition wieder in die Nennposition zu bringen, und vorzugsweise jeder Behälter (22) geeignet ist, um mindestens einen Gegenstand aufzunehmen, wobei der Behälter (22) und der mindestens eine Gegenstand vorzugsweise eine Masse zwischen 1,5 kg und 30 kg aufweisen.

15. Verfahren zur Entnahme eines Behälters (22), durchgeführt in einem System zur Lagerung und Entnahme von Gegenständen (10) nach einem der Ansprüche 13 bis 14, umfassend:
• Zuordnen eines autonomen Fahrzeugs (30a) aus dem mindestens einen autonomen Fahrzeug (30) zu einem zu entnehmenden Behälter (22a) in dem Lagerbereich (12);
• Bewegen des autonomen Fahrzeugs (30a) entlang der beiden horizontalen Richtungen (X1, X2), bis das autonome Fahrzeug (30a) mit vertikalen Kletterelementen (50) eines der Lagerregale (14) ausgerichtet ist, das den zu entnehmenden Behälter (22a) aufnimmt;
• Koppeln der Klettermittel (46) des autonomen Fahrzeugs (30a) mit den Kletterelementen (50) des Lagerregals (14);
• Bewegen des autonomen Fahrzeugs (30a) entlang der vertikalen Richtung (Z), bis sich das autonome Fahrzeug (30a) vertikal auf der Höhe des zu entnehmenden Behälters (22a) befindet, und während der Bewegung des autonomen Fahrzeugs (30a) entlang der vertikalen Richtung (Z) Zurückstoßen von aus den Fächern (20) hervorragenden Behältern (22) in Richtung des Bodens (28) des Fächer (20) durch Kontakt zwischen den Behältern (22) und dem Deflektor (60) des autonomen Fahrzeugs (30), und vorzugsweise bewegt sich das autonome Fahrzeug (30) entlang der vertikalen Richtung mit einer Geschwindigkeit zwischen 0 m/s und 3 m/s.

## Claims

1. Autonomous vehicle (30) for an article storage and retrieval system (ASRS) (10), the autonomous vehicle (30) being configured to move in a storage area (12) to collect a receptacle (22a) from a plurality of receptacles (22) stored in the storage area (12), each receptacle (22) being arranged inside a compartment (20) of the storage area (12), the compartments (20) being distributed along two horizontal directions (X1, X2) and along a vertical direction (Z), the autonomous vehicle (30) comprising:
• a chassis (36);
• rolling means (38) adapted to move the chassis (36) along the two horizontal directions (X1, X2);
• climbing means (46) adapted to move the chassis (36) along the vertical direction (Z);
• gripping means (54) capable of gripping the receptacle (22a);
**characterized in that** the autonomous vehicle also comprises:
• at least one deflector (60) mounted laterally on the chassis (36), the deflector (60) presenting an external guiding surface (62), inclined relative to the vertical direction (Z), configured to push the receptacles (22) back towards a back (28) of the compartments (20) during movement of the chassis (36) along the vertical direction (Z).

2. Autonomous vehicle (30) according to claim 1, wherein the chassis (36) carries internal components comprising at least control electronics, one or more actuators of the rolling means, and an autonomous source of electrical energy, said chassis (36) comprising a cover (58) comprising one or more shells, covering the chassis (36) while at least partially hiding the internal components, and wherein said at least one deflector (60) is the shell or at least one of the shells of the cover, covering a side of the chassis, extending along the vertical direction while projecting outwards from the chassis (36).

3. Autonomous vehicle (30) according to claim 1, wherein the chassis (36) carries internal components comprising at least control electronics, one or more actuators of the rolling means, and an autonomous source of electrical energy, said chassis (36) comprising a cover (58) comprising one or more shells, covering the chassis (36) while at least partially hiding the internal components, and wherein said at least one deflector (60) is distinct from the shell or the shells of the cover.

4. Autonomous vehicle (30) according to one of claims 1 to 3, wherein the guiding surface (62) extends along the vertical direction (Z) and comprises an inclined guiding section (64) configured to push the receptacles (22) back towards the back (28) of the compartments (20) during an ascent along the vertical direction (Z).

5. Autonomous vehicle (30) according to claim 4, wherein the inclined guiding section (64) configured to push the receptacles (22) back towards the back (28) of the compartments (20) during an ascent along the vertical direction (Z) extends between a first point (P1) arranged at an upper end of the deflector (60) and a second point (P2) arranged between the upper end and a lower end of the deflector (60), the straight line connecting the first and second points (P1, P2) forming, with a vertical axis extending along the vertical direction (Z), an angle (a1) comprised between 5° and 20°.

6. Autonomous vehicle (30) according to claim 5, wherein a height (H1) measured along the vertical direction (Z) between the first point (P1) and the second point (P2) is comprised between 60 mm and 100 mm.

7. Autonomous vehicle (30) according to one of claims 4 to 6, wherein the guiding surface (60) comprises:
• said inclined guiding section (64) configured to push the receptacles (22) back towards the back (28) of the compartments (20) during an ascent along the vertical direction, which is a first guiding section (64); and
• a second inclined guiding section (66), arranged lower than the first section (64) along the vertical direction (Z), configured to push the receptacles (20) back towards the back (28) of the compartments (20) during a descent of the autonomous vehicle (30) along the vertical direction (Z).

8. Autonomous vehicle (30) according to claim 7, in combination with claims 4 or 5, wherein the second inclined guiding section (66) extends between a third point (P3), optionally coincident with the second point (P2), and a fourth point (P4) arranged at the lower end of the deflector (60), the straight line connecting the third and fourth points (P3, P4) forming with the vertical direction (Z) an angle comprised between 5° and 20°, and, preferably, a height (H2) measured along the vertical direction (Z) between the third point and the fourth point (P3, P4) is comprised between 60 mm and 100 mm.

9. Autonomous vehicle (30) according to claim 2 alone or taken in combination with one of claims 3 to 8, wherein the shell (60) is a thin-walled plastic or metallic structure.

10. Autonomous vehicle (30) according to any one of the preceding claims, wherein the autonomous vehicle (30) comprises two deflectors (60) mounted on two opposite sides of the chassis (36).

11. Autonomous vehicle (30) according to any one of the preceding claims, wherein the climbing means (46) comprise:
• at least one gear wheel (48), motorized, preferably two gear wheels (48), arranged laterally on the chassis (36), on the same side as the deflector (60), said at least one gear wheel (48) being configured to mesh with a climbing member (50) comprising a gear rack or a link chain extending along the vertical direction (Z),
• a deployment mechanism (52) configured to deploy and retract said at least one gear wheel (48) relative to the chassis (36), said at least one gear wheel (48) moving from a retracted position, intended to decouple the gear wheel (48) from the climbing member (50), to a deployed position, configured to couple said gear wheel (48) to said climbing member (50),
and wherein said deployment mechanism (52) is configured to deploy and retract the deflector (60) jointly with the deployment and retraction of said at least one gear wheel (48).

12. Autonomous vehicle (30) according to one of claims 1 to 11, wherein rolling means (38) comprise at least one wheel (42) adapted for the displacement of the chassis (36) and direction-changing means adapted to change the orientation of the wheel (42).

13. Article storage and retrieval system (10) comprising:
• a plurality of storage racks (14) arranged in a storage area (12) along two horizontal directions (X1, X2), each storage rack (14) extending along a vertical direction (Z), the storage racks (14) comprising:
• a plurality of compartments (20) along the vertical direction (Z), the compartments (20) presenting loading or unloading openings (26) for receptacles (22) along a horizontal loading/unloading direction (X2), and
• vertical climbing members (50),
• a plurality of receptacles (22) arranged in the compartments (20) of each storage rack (14),
• at least one autonomous vehicle (30) according to any one of the preceding claims, comprising the climbing means (46) configured to be coupled to the climbing members (50) to ensure the vertical movement of the chassis (36), wherein said at least one deflector (60) faces the loading or unloading openings (26) of the compartments (20) of the storage rack (14) when the chassis (36) moves along the vertical direction (Z), said at least one deflector (60) being interposed between the loading openings of the storage rack (14) and the chassis (36) of the autonomous vehicle (30).

14. System (10) according to claim 13, wherein in a nominal position of the receptacle (22) in the compartment (20), a distance (D) between a rear end of the receptacle (22) and the back (28) of the compartment (20) is comprised between 8 and 12 mm, and the autonomous vehicle (30) is configured to replace the receptacle (22) in the nominal position starting from a displacement of 10 mm of the receptacle (22) from the nominal position, and, preferably, each receptacle (22) is adapted to receive at least one article, the receptacle (22) and the at least one article preferably having a mass comprised between 1.5 kg and 30 kg.

15. Method for retrieving a receptacle (22) implemented in an article storage and retrieval system (10) according to one of claims 13 to 14, comprising:
• associating an autonomous vehicle (30a) from among the at least one autonomous vehicle (30) with a receptacle to be retrieved (22a) in the storage area (12);
• moving the autonomous vehicle (30a) along the two horizontal directions (X1, X2) until the autonomous vehicle (30a) is aligned with vertical climbing members (50) of one of the storage racks (14) receiving the receptacle to be retrieved (22a);
• coupling the climbing means (46) of the autonomous vehicle (30a) to the climbing members (50) of the storage rack (14);
• moving the autonomous vehicle (30a) along the vertical direction (Z) until the autonomous vehicle (30a) is located vertically at the level of the receptacle to be retrieved (22a), and, during the movement of the autonomous vehicle (30a) along the vertical direction (Z), pushing receptacles (22) projecting from the compartments (20) back towards the back (28) of the compartments (20) by contact between the receptacles (22) and the deflector (60) of the autonomous vehicle (30), and, preferably, the autonomous vehicle (30) moves along the vertical direction at a speed comprised between 0 m/s and 3 m/s.
